# FASCICULE DE BREVET EUROPEEN

(11) **EP 2 475 847 B1**
(45) Date de publication et mention de la délivrance du brevet: **11.11.2015**
(21) Numéro de dépôt: 10763823.1
(22) Date de dépôt: 07.09.2010
(51) Int. Cl.: F01D 11/24, F01D 19/02, F01D 25/10

(54) **PILOTAGE DES JEUX EN SOMMET D'AUBES DANS UNE TURBOMACHINE**
ABSTANDSKONTROLLE AN DEN BLATTSPITZEN EINER TURBOMASCHINE
CLEARANCE CONTROL AT THE BLADE TIPS OF A TURBOMACHINE

(30) Priorité: 08.09.2009 FR 0904275
(43) Date de publication de la demande: 18.07.2012
(73) Titulaire: Snecma, 75015 Paris (FR)
(72) Inventeur: PHILIPPOT, Vincent, F-77550 Moissy Cramayel Cedex (FR)
(74) Mandataire: Ramey, Daniel
(86) Numéro de dépôt international: PCT/FR2010/051855
(87) Numéro de publication internationale: WO 2011/030051

(56) Documents cités:
- EP-A1- 0 492 865
- EP-A1- 0 541 325
- FR-A1- 2 828 908
- FR-A1- 2 890 685
- GB-A- 2 103 718
- GB-A- 2 117 450

## Description

La présente invention concerne une turbomachine, telle qu'un turboréacteur ou un turbopropulseur d'avion, équipée de moyens de pilotage des jeux en sommet d'aubes ainsi qu'un procédé de pilotage de ces jeux.

De manière classique, l'air traversant une turbomachine s'écoule d'amont en aval à travers un compresseur basse et haute pression, puis pénètre à l'intérieur d'une chambre de combustion dont la sortie alimente une turbine haute pression dont le rotor entraîne le rotor du compresseur haute pression puis une turbine basse pression dont le rotor entraîne le rotor du compresseur basse pression.

La turbine haute pression comprend en général une roue à aubes mobiles située entre deux rangées d'aubes fixes amont et aval portées par un carter externe, un jeu radial faible étant prévu entre les sommets des aubes mobiles et le carter externe. La roue mobile comprend un disque portant les aubes et relié à l'arbre de la turbine haute pression.

Lors du fonctionnement de la turbomachine, il est important de minimiser le jeu radial en sommet d'aubes pour éviter les fuites d'air et garantir une performance maximale de la turbomachine.

Cependant, l'ajustement de ce jeu radial s'avère délicat à réaliser puisque les variations dimensionnelles des pièces fixes en fonctionnement sont différentes des variations dimensionnelles des pièces tournantes. En effet, toutes ces pièces sont soumises aux variations de température des gaz de combustion qui induisent des dilations et contractions successives en fonction du régime moteur, mais les variations de température et les variations dimensionnelles correspondantes des parties tournantes sont plus lentes que celles des parties fixes en raison de l'inertie thermique et de la masse du disque de rotor de la turbine haute pression. En outre, il faut également prendre en compte les variations dimensionnelles des aubes de turbine dues aux forces centrifuges en fonctionnement.

Des dispositifs ont été proposés pour le pilotage des jeux en sommet d'aubes, qui comprennent des moyens de prélèvement d'air sur une partie amont du compresseur haute pression, par exemple sur le quatrième étage, et sur une partie aval de ce compresseur, par exemple sur le neuvième étage. Chaque circuit de prélèvement d'air comprend une vanne dont l'ouverture et la fermeture des vannes est commandée par un système de régulation. L'air ainsi prélevé est amené jusqu'au carter externe pour le refroidir ou le réchauffer et ainsi régler les jeux aux sommets des aubes mobiles de la turbine haute pression (voir le document FR2828908-A1 de la demanderesse).

Le système de régulation reçoit des informations relatives au régime de la turbomachine, à la température du carter externe, à la température en sortie du compresseur haute pression, ainsi que des informations relatives au fonctionnement de la turbomachine (ralenti au sol, démarrage à chaud ou à froid, accélération ou décélération temporaire,...).

Ce dispositif connu est complexe puisqu'il nécessite l'installation de vannes et de circuits séparés de prélèvement d'air dans des parties amont et aval du compresseur haute pression. Il est nécessaire de contrôler le degré d'ouverture des vannes pour parfaitement maîtriser la température de l'air destiné à impacter le carter externe, ce qui s'avère également compliqué. De plus, ce type ce dispositif s'avère particulièrement lourd et encombrant. Enfin, le prélèvement d'air sur la partie aval du compresseur haute pression est désavantageux car il consomme de l'air à très haute pression et pénalise le rendement de la turbomachine.

Un autre problème se pose en cas de redémarrage à chaud de la turbomachine, c'est-à-dire lors d'un démarrage de la turbomachine après un temps d'arrêt de celle-ci insuffisant pour que la température de la turbomachine et en particulier celle du disque de rotor de la turbine haute pression soient redescendues à la température ambiante. Après arrêt de la turbomachine, on observe que le refroidissement de celle-ci s'effectue plus rapidement en partie inférieure (à six heures par rapport au cadran d'une montre) qu'en partie supérieure (à douze heures par rapport au cadran d'une montre), ce qui conduit à une excentricité du rotor de turbine haute pression dans le carter externe. Ainsi, les jeux en sommets d'aubes en position inférieure sont réduits et la centrifugation des aubes du rotor de la turbine haute pression peut conduire à des frottements sur le carter externe en position inférieure.

On a également proposé un dispositif de pilotage des jeux par chauffage électrique du carter externe, ce qui permet d'absorber les accélérations et d'éviter les effets néfastes des redémarrages à chaud mais ne permet pas de refroidir le carter pour réduire les jeux en vol de croisière.

Le document GB2117745 décrit un dispositif de réduction des jeux en sommets d'aubes grâce à des moyens de chauffage permettant de rapprocher un carter des extrémités radialement externes des aubes.

Le document EP0492865 décrit un dispositif de contrôle des jeux en sommets d'aubes comprenant un carter comportant des collecteurs agencés conférentiellement bout à bout et recevant ou non de l'air chauffé par exemple par l'intermédiaire de moyens de chauffage électrique.

L'invention a notamment pour but d'apporter une solution simple efficace et économique à ces problèmes de la technique antérieure.

A cette fin, elle propose une turbomachine comprenant des moyens de pilotage des jeux entre les sommets des aubes mobiles d'une turbine haute pression et un carter externe entourant ces aubes, comprenant des moyens de refroidissement du carter externe par impact d'air prélevé sur un étage du compresseur haute pression de la turbomachine, caractérisé par des premiers moyens de chauffage électrique de la partie supérieure du carter externe et des seconds moyens de chauffage électrique de la partie inférieure du carter externe, ainsi que des moyens de commande en tout ou rien des moyens de refroidissement par impact d'air et des moyens indépendants de commande des premiers moyens et des seconds moyens de chauffage électrique.

L'invention, en combinant des moyens de refroidissement du carter par impact d'air et des moyens de chauffage électrique du carter, permet de bénéficier des avantages de ces deux systèmes, tout en évitant leurs inconvénients respectifs.

L'intégration des moyens de chauffage électrique du carter externe permet de supprimer le circuit de prélèvement d'air chaud dans la partie aval du compresseur haute pression et améliore donc les performances de la turbomachine.

Le fonctionnement des moyens de refroidissement par impact d'air en tout ou rien permet de simplifier la conception des moyens de pilotage des jeux car il n'est plus nécessaire de contrôler le degré d'ouverture d'une vanne comme dans la technique antérieure.

En outre, le fonctionnement indépendant des moyens de chauffage électrique de la partie supérieure et de la partie inférieure du carter permet d'apporter une solution au problème du re-démarrage à chaud de la turbomachine en ne commandant spécifiquement que le chauffage de la partie inférieure du carter externe pour éviter les contacts avec les sommets des aubes du rotor de turbine haute pression.

Selon une autre caractéristique de l'invention, les moyens de refroidissement par impact d'air comprennent un anneau porté par le carter externe et comportant des bossages espacés axialement entre lesquels sont installées des rampes multi-perforées de sortie de l'air prélevé sur le compresseur haute pression.

Les moyens de prélèvement d'air sur le compresseur haute pression peuvent comprendre un moyen d'ouverture et de fermeture de l'arrivée d'air sur le carter externe.

Dans une réalisation particulière de l'invention, l'air de refroidissement est prélevé sur le quatrième étage du compresseur haute pression et son débit est de l'ordre de 0,7 % du débit d'air total dans le compresseur.

Dans un mode de réalisation de l'invention, les moyens de chauffage électrique comprennent des circuits résistifs portés par le carter externe sur les parties supérieure et inférieure de celui-ci.

Avantageusement, les circuits résistifs sont montés au voisinage des bossages de l'anneau porté par le carter externe.

L'invention concerne également un procédé de pilotage des jeux en sommet d'aubes de turbine haute-pression dans une turbomachine telle que décrite précédemment, ce procédé consistant lors d'un re-démarrage à chaud de la turbomachine, à activer à puissance maximale les moyens de chauffage électrique de la partie inférieure du carter de turbine haute pression et à désactiver les moyens de chauffage de la partie supérieure de ce carter.

Ainsi, seuls les moyens de chauffage électrique de la partie inférieure sont activés en cas de re-démarrage à chaud, pour éviter une augmentation des jeux en sommets d'aubes et une baisse du rendement de la turbine.

Ce procédé consiste également lors d'un démarrage à froid de la turbomachine, à activer les moyens de chauffage de la partie inférieure du carter externe à une puissance égale à 50 % de leur puissance électrique maximale.

Au début d'une phase d'augmentation du régime de la turbomachine suite à un démarrage à chaud, la puissance des moyens de chauffage électrique de la partie inférieure est temporairement diminuée à environ 50 % de la puissance électrique maximale précité, la puissance électrique augmentant ensuite jusqu'à atteindre environ 75 % de la puissance électrique maximale.

De manière similaire, au début d'une phase d'augmentation du régime de la turbomachine suite à un démarrage à froid, les moyens de chauffage électrique de la partie inférieure sont temporairement désactivés puis réactivés pour atteindre une puissance égale à 75 % de leur puissance électrique maximale.

Cette diminution du chauffage lors d'un démarrage à chaud ou à froid au début de l'augmentation du régime évite une dilatation trop rapide du carter externe par rapport à celle du rotor de turbine haute pression et évite donc un accroissement des jeux en début d'augmentation du régime de la turbomachine qui aggraverait les fuites d'air en sommet d'aubes.

Selon une autre caractéristique du procédé selon l'invention, les moyens de chauffage électriques de la partie inférieure du carter externe sont activés à pleine puissance préalablement à une baisse du régime de la turbomachine en phase de croisière pour éviter une contraction trop rapide du carter externe du fait de la diminution de la température dans la veine primaire et ainsi empêcher les contacts en sommets d'aubes.

Avantageusement, durant la phase de croisière, tous les moyens de chauffage électrique du carter externe sont désactivés et les moyens de refroidissement par impact d'air sont activés.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique partielle en coupe axiale d'une turbine haute pression et d'un dispositif de pilotage des jeux en sommet d'aubes selon la technique antérieure ;
- les figures 2A et 2B sont des représentations schématiques d'une turbomachine lors d'un re-démarrage à froid et à chaud ;
- la figure 3 est une vue schématique partielle en coupe axiale d'une turbine haute pression et d'un dispositif de pilotage des jeux en sommet d'aubes selon l'invention ;
- la figure 4 est un graphe représentant les variations de la puissance de moyens de chauffage électrique de la partie inférieure de la turbomachine selon l'invention.

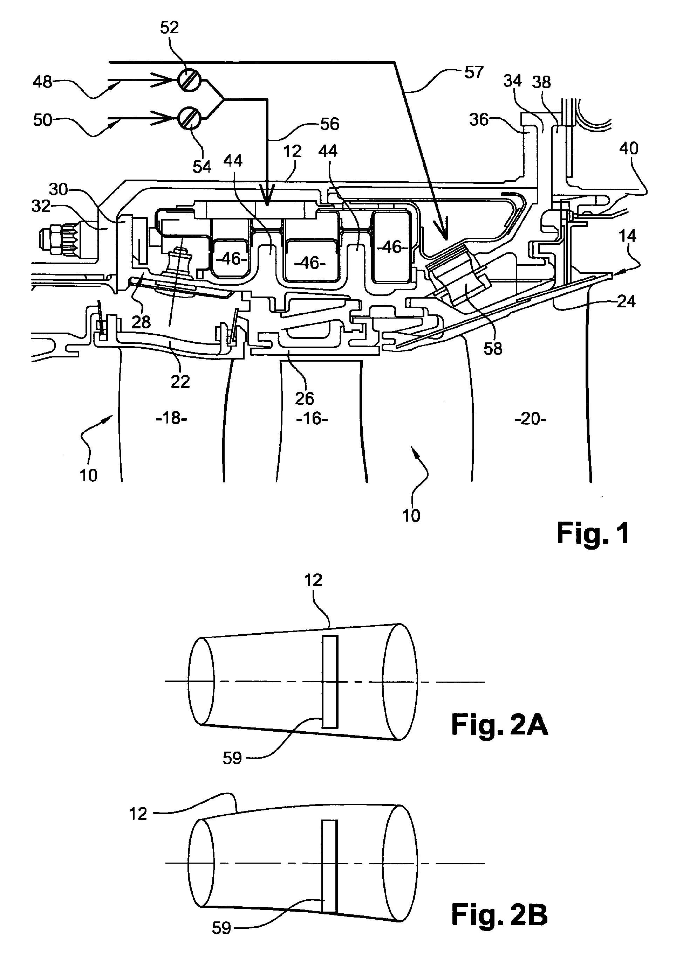

On se réfère tout d'abord à la figure 1 qui représente une partie supérieure d'une turbine haute pression agencée en sortie d'une chambre de combustion et en amont d'une turbine basse pression et qui comporte un carter externe 12 et une paroi 14 délimitant extérieurement la veine d'écoulement du flux d'air primaire dans laquelle tourne une roue à aubes mobiles 16 montée entre deux rangées d'aubes fixes amont 18 et aval 20. La paroi 14 est formée par des segments annulaires 22, 24 qui portent les aubes fixes 18, 20 et par des segments annulaires 26 disposés entre les segments annulaires 22, 24 et en regard des extrémités radialement externes des aubes mobiles 16 portées par un disque de rotor de la turbine haute pression (non représenté).

Un anneau 28 est intercalé entre le carter externe 12 et la paroi 14 et comprend à son extrémité amont une bride radiale 30 de fixation par boulonnage sur un épaulement 32 du carter externe 12, l'extrémité aval comportant une bride radiale 34 serrée entre une bride radiale 36 de l'extrémité aval du carter externe 12 et une bride radiale 38 de l'extrémité aval d'un carter 40 de la turbine basse pression aval. Cet anneau 28 supporte par l'intermédiaire d'une entretoise 42 les segments annulaires 26 entourant les aubes mobiles 16 et comprend une pluralité de bossages 44 espacés axialement les uns des autres et entre lesquels sont installées des rampes multi-perforées 46.

Des moyens de pilotage des jeux entre les sommets des aubes 16 et les segments annulaires 26 comprennent un circuit de prélèvement d'air froid 48 sur une partie amont du compresseur, par exemple sur le quatrième étage de compression et un circuit de prélèvement d'air chaud 50 sur une partie aval du compresseur, par exemple sur le neuvième étage de compression. Chaque circuit de prélèvement d'air froid 48 et d'air chaud 50 est relié en sortie à une vanne 52, 54 contrôlant le débit prélevé en air froid et en air chaud. Un conduit 56 relié à la sortie des vannes permet d'injecter le mélange d'air prélevé dans le compresseur haute pression dans les rampes multi-perforées 46 au travers desquelles l'air est éjecté et impacte l'anneau 28 pour le refroidir ou le chauffer.

Un troisième circuit de prélèvement d'air 57 sur le quatrième étage du compresseur haute pression est prévu pour refroidir la turbine basse pression. Pour cela, l'air froid prélevé est directement injecté à l'intérieur de la veine d'écoulement du flux d'air primaire à travers le carter externe 12 et passe par des orifices 58 de l'anneau 28 qui débouchent au niveau de la rangée d'aubes fixes 20. Le débit de cet air de refroidissement est de l'ordre de 2% du débit d'air total du compresseur haute pression.

D'une manière générale, on comprend bien que le refroidissement ou le chauffage de l'anneau par impact d'air prélevé dans le compresseur haute pression induit un refroidissement ou un chauffage, respectivement, du carter externe 12 et de l'anneau 28. Ce chauffage ou refroidissement permet de contrôler la position radiale des segments annulaires 26 en regard des aubes mobiles 16 et donc les jeux aux sommets des aubes mobiles 16.

Le contrôle du mélange d'air froid et d'air chaud impactant l'anneau 28 est réalisé au moyen d'un système de régulation à pleine autorité (ou FADEC en anglais) de la turbomachine qui prend en compte une pluralité d'informations telles que par exemple le mode de fonctionnement de la turbomachine, la température du carter externe 12 et le temps d'arrêt de la turbomachine entre deux utilisations, pour déterminer l'ouverture adéquate des vannes 54, 52 et ainsi minimiser le jeu en sommet d'aubes 16.

Par exemple, lorsque la turbomachine est démarrée à froid et est au ralenti au sol, le carter externe 12 et le disque du rotor de la turbine haute pression sont à l'équilibre thermique (figure 2A). Le rotor de la turbine haute pression 59 est ainsi centré à l'intérieur du carter externe 12. Du fait de l'inertie thermique du disque du rotor de turbine haute pression et de la dilatation plus rapide du carter externe 12, il est nécessaire dans cette configuration de refroidir le carter externe 12 pour éviter une augmentation des jeux en sommets d'aubes. Ainsi, le système de régulation commande l'ouverture de la vanne 52 de prélèvement d'air froid sur le quatrième étage de compression et commande la fermeture de la vanne 54 de prélèvement d'air chaud sur le neuvième étage de compression. L'air prélevé est ensuite acheminé jusqu'aux rampes multi-perforées 46 et sort de celles-ci pour impacter les bossages 44 de l'anneau 28 et refroidir l'anneau 28 et le carter externe.

Cependant, ces moyens de refroidissement et de réchauffement par impact d'air sur le carter externe 12 fonctionnent de manière uniforme sur toute la circonférence de la turbine haute pression, c'est dire que toute la circonférence de l'anneau 28 est impactée par un seul et même mélange d'air issu du compresseur haute pression, ce qui n'est pas satisfaisant en cas de re-redémarrage à chaud de la turbomachine.

En effet, le carter externe 12 refroidissant plus vite que le disque de rotor de la turbine haute pression (il faut environ 5 heures pour que le disque soit refroidi), et le refroidissement de la turbomachine étant plus rapide en partie inférieure qu'en partie supérieure, on observe une excentration du rotor de turbine haute pression 59 à l'intérieur du carter externe 12 (figure 2B). En cas de re-démarrage à chaud, les jeux en sommet d'aubes en position inférieure sont très faibles et l'effet de la force centrifuge sur le rotor de la turbine haute pression conduit, par augmentation de la dimension radiale des aubes mobiles 16, à des contacts en position inférieure entre les extrémités radialement externes des aubes mobiles 16 et les segments annulaires 26 situés en regard de celles-ci.

L'utilisation de moyens de pilotage des jeux par impact d'air tels que décrits précédemment conduirait à dilater uniformément toute la circonférence du carter externe 12 et donc à augmenter de manière excessive les jeux en sommet d'aubes en partie supérieure de la turbomachine.

L'invention apporte une solution à ce problème ainsi qu'à ceux mentionnés précédemment en supprimant les moyens de prélèvement d'air chaud 50 sur le compresseur haute pression et en les remplaçant par des premiers moyens de chauffage électrique de la partie supérieure du carter externe 12 commandés indépendamment de seconds moyens de chauffage électrique de la partie inférieure du carter externe 12. Le chauffage électrique du carter externe 12 s'avère plus rapide et donc plus réactif que le chauffage par impact d'air chaud et ne diminue pas les performances du compresseur haute pression de la turbomachine.

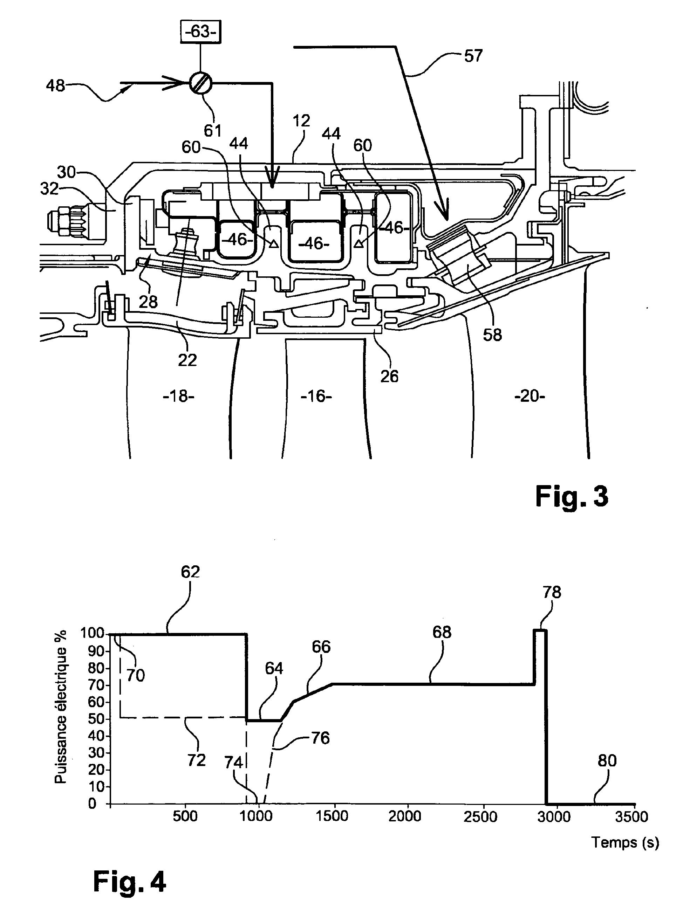

Les premiers et seconds moyens de chauffage électrique 60 de la partie supérieure et inférieure du carter externe 12 sont montés au voisinage des bossages 44 de l'anneau 28 comme représenté sur la figure 3 et peuvent être des circuits de type résistifs.

Des moyens de commande indépendants des premiers et seconds moyens de chauffage électrique 60 sont prévus et sont reliés au système de régulation de manière à commander indépendamment le chauffage des parties inférieure et supérieure du carter externe 12, ce qui permet de répondre au problème du re-démarrage à chaud de la turbomachine comme cela est expliqué plus en détail ci-dessous.

Le refroidissement du carter externe 12 est réalisé par des moyens de refroidissement par impact d'air tels que décrit précédemment, c'est-à-dire par l'intermédiaire d'un circuit 48 de prélèvement d'air sur le quatrième étage du compresseur haute pression, cet air alimentant les rampes multi-perforées 46 et étant éjecté en direction des bossages 44 de l'anneau 28. A la différence de la technique antérieure, les moyens de refroidissement peuvent comprendre une vanne 61 pilotée en tout ou rien par l'intermédiaire de moyens de commande 63 reliés au système de régulation.

La figure 4 est un graphe représentant les variations de la puissance des moyens de chauffage électrique de la partie inférieure de la turbomachine lors d'un re-démarrage à froid en pointillés et lors d'un re-démarrage à chaud en trait plein.

Pour éviter les contacts en sommets d'aubes dans la partie inférieure de la turbomachine lors d'un redémarrage à chaud, les moyens de chauffage électrique de la partie inférieure de l'anneau 28 sont activés à pleine puissance en 62, ce qui permet de dilater l'anneau et ainsi d'augmenter les jeux en sommet d'aubes dans cette partie. Dans le même temps, les moyens de chauffage électrique de la partie supérieure de l'anneau 28 sont désactivés puisque les jeux en sommets d'aubes 16 en cet endroit sont suffisants comme cela été expliqué précédemment, ce qui évite une augmentation des jeux en sommet d'aubes dans la partie supérieure qui dégraderait les performances de la turbomachine.

Suite à un démarrage à chaud et au début d'une phase d'augmentation du régime de la turbomachine, les moyens de chauffage électrique de la partie inférieure sont temporairement alimentés à environ 50% de leur puissance maximale en 64, ce qui évite une augmentation des jeux du fait d'une dilatation rapide du carter externe 12 due à l'effet conjugué du chauffage électrique et de l'augmentation de la température des gaz dans la veine primaire en conséquence de l'augmentation du régime.

La puissance électrique est ensuite progressivement ré-augmentée en 66 jusqu'à atteindre environ 75% de la puissance maximale 68 pour réajuster les jeux en sommets d'aubes du fait de la dilatation progressive du disque du rotor de turbine haute pression.

L'invention est également utilisable lors d'un démarrage à froid de la turbomachine (figure 4). Dans ce cas, les moyens de chauffage électrique de la partie inférieure sont activés à pleine puissance pendant une courte période 70 (typiquement 3 secondes) jusqu'à l'établissement du régime de ralenti au sol après lequel leur puissance est diminuée en 72 à 50% de la puissance maximale. En effet, durant la période de ralenti au sol, il n'est pas nécessaire de dilater fortement la partie inférieure du carter externe puisque le rotor de la turbine haute pression n'est pas excentré à l'intérieur du carter externe 12.

En début d'augmentation du régime de la turbomachine suite à un démarrage à froid, les moyens de chauffage électrique de la partie inférieure sont temporairement désactivés en 74 pour éviter une dilatation rapide du carter externe comme cela a été expliqué ci-dessus en référence à une augmentation du régime suite à un re-démarrage à chaud.

La puissance électrique est ensuite progressivement ré-augmentée en 76 jusqu'à atteindre environ 75% de la puissance maximale en 68 pour réajuster les jeux en sommet d'aubes du fait de la dilatation progressive du disque du rotor de turbine haute pression.

Les moyens de chauffage électriques de la partie inférieure du carter externe 12 sont activés à pleine puissance en 78 préalablement à une baisse du régime en phase de croisière que la turbomachine ait été re-démarrée à froid ou à chaud. Cela évite une contraction trop rapide du carter externe et permet de le maintenir à une température suffisante pendant le temps nécessaire à la diminution des dimensions radiales des aubes mobiles du à la baisse de la température en conséquence de la baisse du régime.

Lors d'une phase de croisière en 80, les moyens de chauffage électriques sont désactivés et seuls les moyens de refroidissement par impact d'air sont activés et la vanne est mise en position ouverte.

Il ainsi possible avec l'invention d'avoir des moyens de refroidissement par impact d'air qui ne fonctionnent qu'en phase de croisière et sur un mode de fonctionnement en tout ou rien qui est très simple à mettre en oeuvre.

## Revendications

1. Turbomachine comprenant des moyens de pilotage des jeux entre les sommets des aubes mobiles (16) d'une turbine haute pression et un carter externe (12) entourant ces aubes (16), comprenant des moyens de refroidissement du carter externe par impact d'air (48, 46) prélevé sur un étage du compresseur haute pression de la turbomachine, **caractérisé par** des premiers moyens de chauffage électrique (60) de la partie supérieure du carter externe (12) et des seconds moyens de chauffage électrique de la partie inférieure du carter externe (12), ainsi que des moyens de commande en tout ou rien (63) des moyens de refroidissement par impact d'air (48, 61, 46) et des moyens indépendants de commande des premiers moyens et des seconds moyens de chauffage électrique (60).

2. Turbomachine selon la revendication 1, **caractérisé en ce que** les moyens de refroidissement par impact d'air (48, 46) comprennent un anneau (28) porté par le carter externe (12) et comportant des bossages (44) espacés axialement entre lesquels sont installées des rampes multi-perforées (46) de sortie de l'air prélevé sur le compresseur haute pression.

3. Turbomachine selon la revendication 1 ou 2, **caractérisé en ce que** les moyens de prélèvement d'air (48) sur le compresseur haute pression comportent une vanne (61) d'ouverture et de fermeture de l'arrivée d'air sur le carter externe (12).

4. Turbomachine selon l'une des revendications 1 à 3, **caractérisé en ce que** l'air de refroidissement est prélevé sur le quatrième étage du compresseur haute pression et son débit est de l'ordre de 0,7 % du débit d'air total dans le compresseur.

5. Turbomachine selon l'une des revendications 1 à 4, **caractérisé en ce que** les moyens de chauffage électrique (60) comprennent des circuits résistifs portés par le carter externe (12) sur les parties supérieure et inférieure de celui-ci.

6. Turbomachine selon l'ensemble des revendications 2 et 5, **caractérisé en ce que** les circuits résistifs sont montés au voisinage des bossages (44) de l'anneau (28) porté par le carter (12).

7. Procédé de pilotage des jeux en sommet d'aubes de turbine haute-pression dans une turbomachine selon l'une des revendications précédentes, **caractérisé en ce qu'**il consiste lors d'un re-démarrage à chaud de la turbomachine, à activer à puissance maximale les moyens de chauffage électrique (60) de la partie inférieure du carter (12) de turbine haute pression et à désactiver les moyens de chauffage (60) de la partie supérieure de ce carter.

8. Procédé selon la revendication 7, **caractérisé en ce qu'**au début d'une phase d'augmentation du régime de la turbomachine suite à un démarrage à chaud, la puissance des moyens de chauffage électrique (60) de la partie inférieure est temporairement diminuée à environ 50 % de la puissance électrique maximale, la puissance électrique augmentant ensuite jusqu'à atteindre environ 75 % de la puissance électrique maximale.

9. Procédé selon la revendication 7 ou 8, **caractérisé en ce qu'**il consiste lors d'un démarrage à froid de la turbomachine, à activer les moyens de chauffage électrique (60) de la partie inférieure du carter externe (12) à une puissance égale à 50 % de leur puissance électrique maximale.

10. Procédé selon la revendication 9, **caractérisé en ce qu'**au début d'une phase d'augmentation du régime de la turbomachine suite à un démarrage à froid, les moyens de chauffage électrique (60) de la partie inférieure sont temporairement désactivés puis réactivés avec une puissance égale à 75 % de leur puissance électrique maximale.

11. Procédé selon l'une des revendications 7 à 10, **caractérisé en ce que** les moyens de chauffage électrique (60) de la partie inférieure du carter externe sont activés à pleine puissance préalablement à une baisse du régime de la turbomachine en phase de croisière.

12. Procédé selon l'une des revendications 7 à 11, **caractérisé en ce qu'**il consiste durant la phase de croisière, à désactiver tous les moyens de chauffage électrique du carter externe et à activer les moyens de refroidissement par impact d'air.

## Patentansprüche

1. Turbomaschine bzw. Turbotriebwerk, enthaltend eine Steuereinrichtung zum Steuern des Spiels zwischen den Spitzen von beweglichen Schaufeln (16) einer Hochdruckturbine und einem Außengehäuse (12), das diese Schaufeln (16) umgibt, enthaltend eine Kühleinrichtung zum Abkühlen des Außengehäuses mittels eines Luftstoßes (48, 46), der einer Hochdruckkompressorstufe der Turbomaschine bzw. des Turbotriebwerks entnommen wird, **gekennzeichnet durch** eine erste elektrische Heizeinrichtung (60) für den oberen Teil des Außengehäuses (12) und eine zweite elektrische Heizeinrichtung für den unteren Teil des Außengehäuses (12) sowie durch eine EIN-AUS-Steuereinrichtung (63) für die Luftstoßkühleinrichtung (48, 61, 46) und eine unabhängige Steuereinrichtung zum Steuern der ersten und der zweiten elektrischen Heizeinrichtung (60).

2. Turbomaschine bzw. Turbotriebwerk nach Anspruch 1, **dadurch gekennzeichnet, dass** die Luftstoßkühleinrichtung (48, 46) einen Ring (28) aufweist, der von dem Außengehäuse (12) getragen wird und Erhebungen (44) aufweist, die axial beabstandet sind, zwischen welchen mehrfach gelochte Rampen (46) zum Austritt von Luft eingesetzt sind, die dem Hochdruckkompressor entnommen wird.

3. Turbomaschine bzw. Turbotriebwerk nach Anspruch 1 oder 2, **dadurch gekennzeichnet, dass** die Luftentnahmeeinrichtung (48) zur Luftentnahme vom Hochdruckkompressor ein Ventil (61) zum Öffnen und Schließen der Luftzufuhr am Außengehäuse (12) aufweist.

4. Turbomaschine bzw. Turbotriebwerk nach einem der Ansprüche 1 bis 3, **dadurch gekennzeichnet, dass** die Kühlluft an der vierten Stufe des Hochdruckkompressors entnommen wird und dass dessen Durchsatzmenge in der Größenordnung von 0,7 % des Gesamtluftdurchsatzes im Kompressor beträgt.

5. Turbomaschine bzw. Turbotriebwerk nach einem der Ansprüche 1 bis 4, **dadurch gekennzeichnet, dass** die elektrische Heizeinrichtung (60) Widerstandsschaltungen aufweist, die von dem Außengehäuse (12) am oberen und am unteren Teil desselben getragen werden.

6. Turbomaschine bzw. Turbotriebwerk nach den Ansprüchen 2 und 5 zusammengenommen, **dadurch gekennzeichnet, dass** die Widerstandsschaltungen benachbart zu den Erhebungen (44) des Rings (28) angeordnet sind, der von dem Gehäuse (12) getragen wird.

7. Verfahren zum Steuern des Spiels an den Schaufelspitzen einer Hochdruckturbine bei einer Turbomaschine bzw. einem Turbotriebwerk nach einem der vorangehenden Ansprüche, **dadurch gekennzeichnet, dass** es darin besteht, bei einem erneuten Warmstart der Turbomaschine bzw. des Turbotriebwerks die elektrische Heizeinrichtung (60) für den unteren Teil des Gehäuses (12) der Hochdruckturbine mit maximaler Leistung zu aktivieren und die Heizeinrichtung (60) für den oberen Teil dieses Gehäuses zu deaktivieren.

8. Verfahren nach Anspruch 7, **dadurch gekennzeichnet, dass** zu Beginn einer Phase der Erhöhung der Drehzahl der Turbomaschine bzw. des Turbotriebwerks nach einem Warmstart die Leistung der elektrischen Heizeinrichtung (60) für den unteren Teil vorübergehend auf etwa 50 % der maximalen elektrischen Leistung vermindert wird, wobei die elektrische Leistung dann bis zum Erreichen von etwa 75 % der maximalen elektrischen Leistung erhöht wird.

9. Verfahren nach Anspruch 7 oder 8, **dadurch gekennzeichnet, dass** es darin besteht, bei einem Kaltstart der Turbomaschine bzw. des Turbotriebwerks die elektrische Heizeinrichtung (60) für den unteren Teil des Gehäuses mit einer Leistung gleich 50 % ihrer maximalen elektrischen Leistung zu aktivieren.

10. Verfahren nach Anspruch 9, **dadurch gekennzeichnet, dass** zu Beginn einer Phase der Erhöhung der Drehzahl der Turbomaschine bzw. des Turbotriebwerks nach einem Kaltstart die elektrische Heizeinrichtung (60) für den unteren Teil vorübergehend deaktiviert und dann mit einer Leistung gleich 75 % ihrer maximalen elektrischen Leistung erneut aktiviert wird.

11. Verfahren nach einem der Ansprüche 7 bis 10, **dadurch gekennzeichnet, dass** die elektrische Heizeinrichtung (60) für den unteren Teil des Außengehäuses mit voller Leistung aktiviert wird, bevor eine Verminderung der Drehzahl der Turbomaschine bzw. des Turbotriebwerks in der Reiseflugphase erfolgt.

12. Verfahren nach einem der Ansprüche 7 bis 11, **dadurch gekennzeichnet, dass** es darin besteht, während der Reiseflugphase sämtliche elektrische Heizeinrichtungen des Außengehäuses zu deaktivieren und die Luftstoßkühleinrichtung zu aktivieren.

## Claims

1. A turbine engine including means for controlling the clearance between the tips of moving blades (16) of a high-pressure turbine and an outer casing (12) surrounding the blades (16), the control means (48, 46) comprising air-impact cooling means for cooling the outer casing by the impact of air taken from a high-pressure compressor stage of the engine, the turbine engine being **characterized by** first electric heater means (60) for heating the top portion of the outer casing (12) and second electric heater means for heating the bottom portion of the outer casing (12), together with on/off control means (63) for controlling the air-impact cooling means (48, 61, 46), and independent means for controlling the first and second electric heater means (60).

2. A turbine engine according to claim 1, **characterized in that** the air-impact cooling means (48, 46) comprise a ring (28) carried by an outer casing (12) and including projections (44) that are axially spaced apart from one another with multiply-perforated strips (46) being installed therebetween for delivering the air taken from the high-pressure compressor.

3. A turbine engine according to claim 1 or claim 2, **characterized in that** the means (48) for taking air from the high-pressure compressor include a valve (61) for opening and closing the delivery of air to the outer casing (12).

4. A turbine engine according to any one of claims 1 to 3, **characterized in that** the cooling air is taken from the fourth stage of the high-pressure compressor at a rate that is about 0.7% of the total air flow rate through the compressor.

5. A turbine engine according to any one of claims 1 to 4, **characterized in that** the electric heater means (60) comprise resistive circuits carried by the outer casing (12) on the top and bottom portions thereof.

6. A turbine engine according to claims 2 and 5 taken together, **characterized in that** the resistive circuits are mounted in the vicinity of the projections (44) of the ring (28) carried by the casing (12).

7. A method of controlling clearance at the tips of high-pressure turbine blades in a turbine engine according to any preceding claim, the method being **characterized in that** it consists, when restarting the turbine engine while hot, in activating the electric heater means (60) for the bottom portion of the high-pressure turbine casing (12) at maximum power and in deactivating the heater means (60) for heating the top portion of the casing.

8. A method according to claim 7, **characterized in that**, at the beginning of a stage of increasing turbine engine speed following a hot restart, the power to the electric heater means (60) of the bottom portion is temporarily decreased to about 50% of the maximum electrical power, with the electrical power subsequently being increased until it reaches about 75% of the maximum electrical power.

9. A method according to claim 7 or claim 8, **characterized in that**, during a cold start of the turbine engine, it consists in activating the electric heater means (60) for heating the bottom portion of the outer casing (12) to a power equal to 50% of their maximum electrical power.

10. A method according to claim 9, **characterized in that**, at the beginning of a stage of increasing the speed of the turbine engine following a cold start, the electric heater means (60) of the bottom portion are temporarily deactivated and then reactivated with power equal to 75% of their maximum electrical power.

11. A method according to any one of claims 7 to 10, **characterized in that** the electric heater means (60) for heating the bottom portion of the outer casing are activated at full power prior to a reduction in the speed of the turbine engine during a cruising stage.

12. A method according to any one of claims 7 to 11, **characterized in that**, during the cruising stage, it consists in deactivating all of the electric heater means of the outer casing and in activating the air-impact cooling means.
